# EUROPEAN PATENT APPLICATION

(11) **EP 3 495 920 A1**
(43) Date of publication of application: **12.06.2019**
(21) Application number: 17205726.7
(22) Date of filing: 06.12.2017
(51) Int. Cl.: G06F 3/01, G06F 3/02, H01H 13/85, H01H 3/00

(54) **KEYBOARD, METHOD AND COMPUTER PROGRAM FOR CONTROLLING AN ELECTRONIC DEVICE**

(71) Applicant: Vestel Elektronik Sanayi ve Ticaret A.S., 45030 Manisa (TR)
(72) Inventor: DÖNER,, Çagdas, 45030 Manisa (TR)
(74) Representative: Martinez, Olivier Gildas

(57) **Abstract**

A keyboard for controlling an electronic device comprises at least one key which can be pressed into a pressed position and a locking mechanism for locking the key in the pressed position. The keyboard is configured to transmit (404) a control signal to a said electronic device when the key is pressed into a pressed position. The keyboard is configured to cause the locking mechanism to lock (406) the key in the pressed position. The keyboard is configured to cause the locking mechanism to release (410) the key from the pressed position in response to receiving a feedback signal indicating that the control signal has been received by a said electronic device.

## Description

### Technical Field

The present disclosure relates to a keyboard, a method and a computer program for controlling an electronic device.

### Background

Many devices have no or limited input/output peripherals, such as a keyboard, display screen, etc. and therefore have to be controlled or configured using some external device. However, this can be difficult to achieve, especially if the device is embedded or otherwise difficult to monitor directly.

### Summary

According to a first aspect disclosed herein, there is provided a keyboard for controlling an electronic device, the keyboard comprising at least one key which can be pressed into a pressed position; and
a locking mechanism for locking the key in the pressed position;
the keyboard being configured to:
transmit a control signal to a said electronic device when the key is pressed into a pressed position and to cause the locking mechanism to lock the key in the pressed position; and
cause the locking mechanism to release the key from the pressed position in response to receiving a feedback signal indicating that the control signal has been received by a said electronic device.

The locking mechanism may comprise an electromechanical or electromagnetic switch operable to lock the key in the pressed position and to release the key from the pressed position

The key may comprise comprises a permanent magnet and the electromagnetic switch comprises a coil operable to generate a magnetic force to lock the key in the pressed position.

The keyboard may be configured to:
transmit an instruction or parameter typed by a user to a said electronic device using other keys of the keyboard; and
transmit the control signal to a said electronic device to indicate that the key is in the pressed position and that the instruction or parameter is to be processed by a said electronic device.

The keyboard may be configured to:
cause the locking mechanism to release the key from the pressed position in response to receiving a feedback signal indicating the reception of the control signal by a said electronic device and that the instruction or the parameter has been processed by a said electronic device.

The key may be a return/enter key.

The keyboard may be configured such that:
the transmitted control signal indicates that the key is in the pressed position and that a predetermined instruction or parameter stored on a said electronic device is to be processed by a said electronic device.

The keyboard may be configured to:
cause the locking mechanism to release the key from the pressed position in response to receiving a feedback signal indicating the reception of the control signal by a said electronic device and the predetermined instruction or parameter stored on a said electronic device has been processed by a said electronic device.

The key may be a function key.

According to a second aspect disclosed herein, there is provided a system comprising an electronic device and any of the above keyboards.

A said electronic device may be an Internet of Things (IoT) device.

According to a third aspect disclosed herein, there is provided a method of operating a keyboard for controlling an electronic device, the method comprising:
transmitting a control signal to a said electronic device to indicate that a key of the keyboard is in a pressed position;
locking the key in the pressed position; and
unlocking the key from the pressed position in response to receiving a feedback signal indicating that the control signal has been received by a said electronic device.

According to a fourth aspect disclosed herein, there is provided a computer program for a keyboard, comprising software code portions for performing the above method when said computer program is run on the keyboard.

### Brief Description of the Drawings

To assist understanding of the present disclosure and to show how embodiments may be put into effect, reference is made by way of example to the accompanying drawings in which:
Figure 1 shows schematically an example of a system according to an embodiment disclosed herein;
Figures 2 and 3 shows schematically a cross section of an example of a keyboard according to an embodiment disclosed herein;
Figure 4 shows schematically an example of a flow diagram of a method performed by a keyboard according to an embodiment disclosed herein;
Figure 5 shows schematically an example of a flow diagram of a method performed by an electronic device according to an embodiment disclosed herein;
Figure 6 shows schematically an example of a flow diagram of a method performed by a keyboard according to another embodiment disclosed herein; and
Figure 7 shows schematically an example of a flow diagram of a method performed by an electronic device according to another embodiment disclosed herein.

### Detailed Description

In general, as used herein, an IoT device is a device that has an addressable interface (e.g. an Internet protocol (IP) address, a Bluetooth identifier (ID), a near-field communication (NFC) ID, etc.) and can transmit information to one or more other devices over a wired or wireless connection. IoT devices may in general include or be incorporated in for example sensors, refrigerators, ovens, microwaves, freezers, dishwashers, clothes washing machines, clothes dryers, furnaces, air conditioners, thermostats, televisions and other consumer electronic devices, light fixtures, vacuum cleaners, sprinklers, electricity meters, gas meters, etc.

A known solution to configure or control a device, including for example an IoT device, when the device is off-line and not connected to a network or otherwise cannot be configured or controlled via a network connection, has often been to equip the device with a keyboard and a display so that configuration instructions and parameters can directly be input by a user and confirmation that these configuration instructions and parameters have been processed can directly be output to the user. This solution is not satisfying because it increases the complexity and cost of the device and potentially the size of the device. Moreover, the user may not be able to see or monitor the device directly, as the device may be embedded in some other device or apparatus or is otherwise inaccessible. This is a particular problem with many IoT devices in particular.

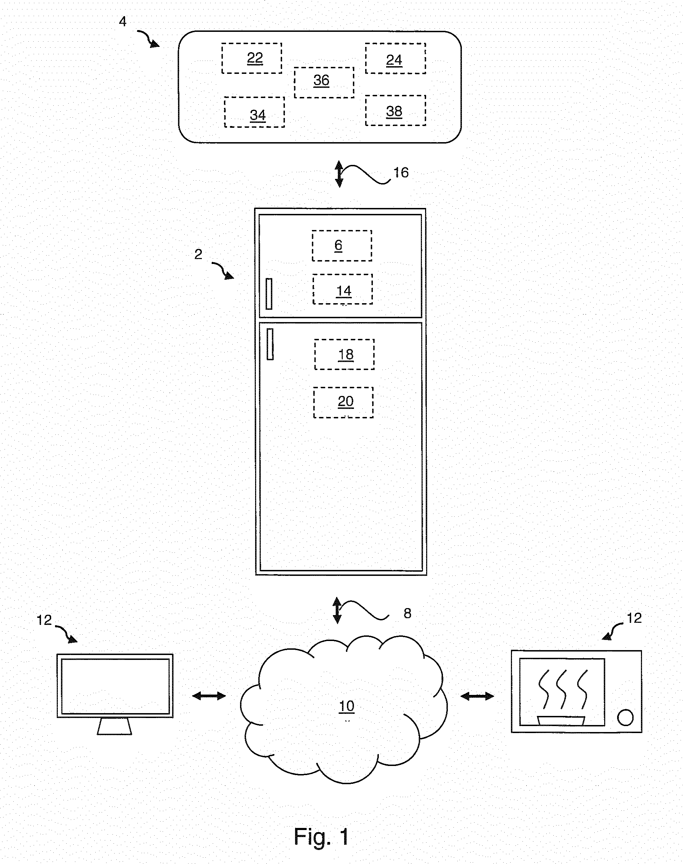

Figure 1 shows an example of a system according to an embodiment. The system comprises an electronic device 2 and a keyboard 4 for controlling the electronic device 2. Here, the electronic device 2 is a refrigerator but it will be understood that the electronic device 2 may be any device such an oven, a washing machine, an air conditioning unit, a television set, a video camera, a sensor, etc. The electronic device 2 may be or include an IoT device.

The electronic device 2 comprises a communication unit 6 to communicate with other electronic devices 12 connected to the Internet 10 via a communication link 8. The communication link 8 may be a wired communication link (e.g. Ethernet communication link) or a wireless communication link (e.g. Wi-Fi communication link).

The electronic device 2 comprises a communication unit 14 to communicate with the keyboard 4 over a communication link 16. The communication link 16 may be a wired communication link (e.g. Universal Serial Bus communication link) or a wireless communication link (e.g. Bluetooth communication link). When the communication link 16 is a wired communication link, the keyboard 4 is preferably configured to be selectively plugged and unplugged from the electronic device 2.

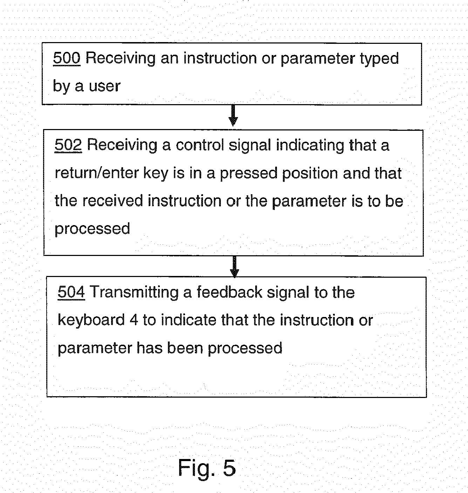

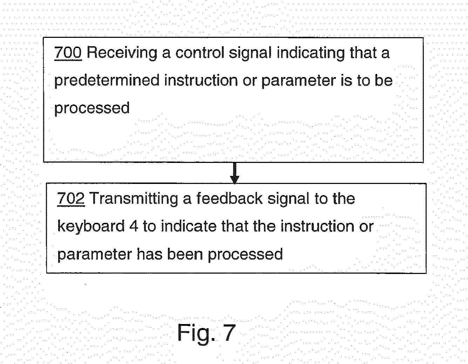

The electronic device 2 comprises a memory unit 18 and a processing unit 20. The memory unit 18 stores instructions which when executed by the processing unit 20 enables the processing unit to perform one or more of the steps of the method of Figure 5 or Figure 7 (described in further detail below).

The keyboard 4 comprises one or more keys 22 configured to be pressed from a non-pressed position (i.e. upward position) to a pressed position (i.e. downward position).

The keys 22 comprise one or more alpha numerical keys (e.g. a to z, 0 to 9) to enable a user to type configuration instructions or parameters to be transmitted to the electronic device 2.

The keys 22 comprise one or more return/enter keys to enable a user to instruct the electronic device 2 to process the typed configuration instructions or parameters.

The keys 22 comprise one or more function keys (e.g. F1 to F12) to enable a user to instruct the electronic device 2 to process predetermined configuration instructions or parameters stored in the memory unit 18 of the electronic device 2. Each function key may be associated with a respective configuration instruction or parameter.

The keyboard 4 comprises one or more locking mechanisms 24 to selectively lock and release (i.e. unlock) the function keys and the return keys in the pressed position. Each locking mechanism 24 comprises an electromagnetic switch or an electromechanical switch configured to lock a respective key in the pressed position when a locking signal is provided and to release the respective key from the pressed position when an unlocking signal is provided.

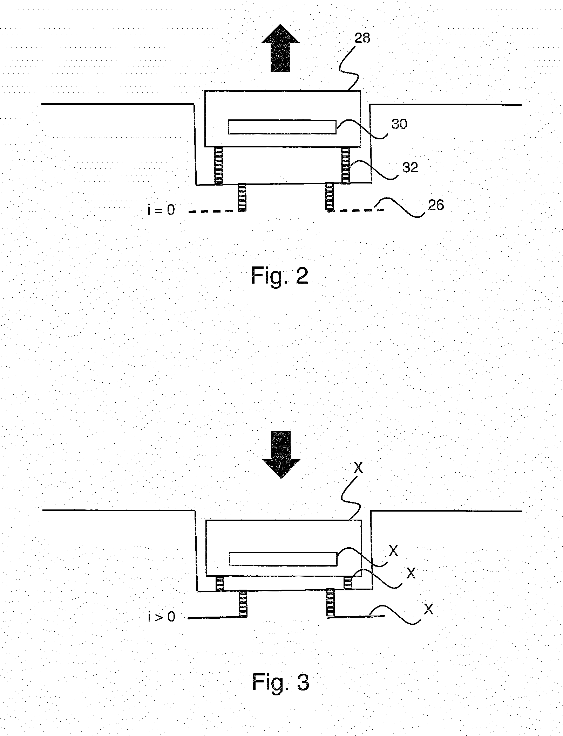

In an implementation (shown in Figure 2 and 3) a locking mechanism 24 comprises a coil and a respective key 28 is equipped with a permanent magnet 30. A spring 32 is arranged to bias the key 28 away from the pressed position (i.e. to bias the key 28 towards the non-pressed position).

The coil 26 is operated to generate a magnetic force moving the key 28 toward the pressed position when the locking signal is provided. For example, a current flows in a first direction within the coil 26 when the locking signal is provided.

The coil 26 is further operated to abstain from generating a magnetic force when the unlocking signal is provided. For example, no current flows within the coil 26 when the unlocking signal is provided. In this way, the spring 32 moves the key 28 away from the pressed position (i.e. toward the non-pressed position) when the locking signal is provided.

In another implementation (not shown), the spring 32 is omitted and the coil 26 is operated to generate a magnetic force moving the key 28 away from the pressed position when the unlocking signal is provided. For example, a current flows in the opposite direction within the coil 26 when the unlocking signal is provided.

The keyboard 4 comprises a communication unit 34 to communicate with the electronic device 2 via the communication link 16.

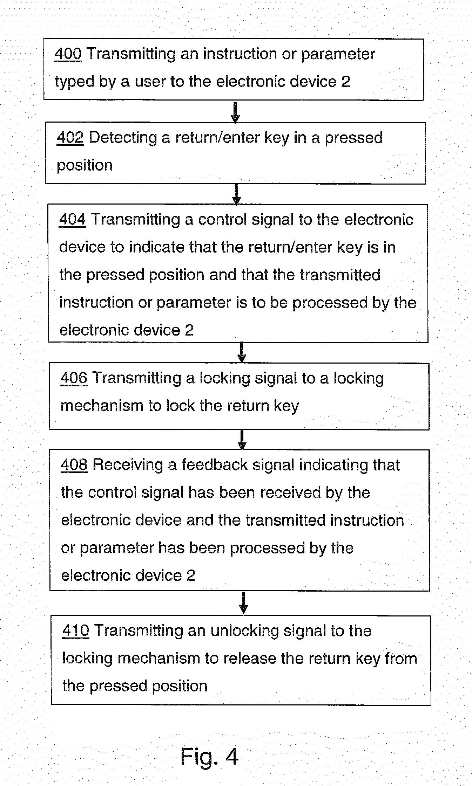

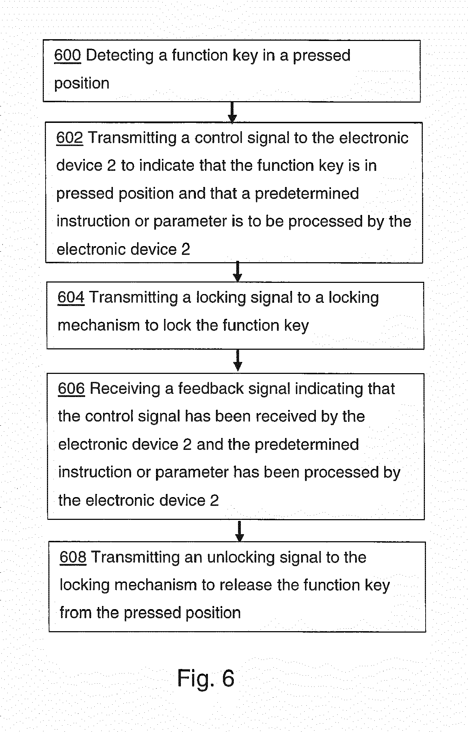

The keyboard 4 comprises a memory unit 36 and a processing unit 38. The memory unit 36 stores instructions which when executed by the processing unit 38 enables the processing unit 38 to perform one or more of the steps of the method of Figure 4 or Figure 6 (described in further detail below).

It will be understood that although the keyboard 4 is here mechanically separate from the electronic device 2, it could also be integrate with the electronic device 2 (e.g. embedded).

Figure 4 shows an example of a flow diagram of a method performed by the keyboard 4 according to an embodiment.

In step 400, a user types a configuration instruction (e.g. set language, set clock, set frequency to report sensor data, set temperature, set power consumption mode, reboot, etc.) or a parameter (e.g. English, 10:23 am, X ms, X degrees, eco mode, safe reboot mode, etc.) by pressing one or more of the alpha numerical keys. The processing unit 38 passes the configuration instruction or parameter to the communication unit 34 for transmission to the electronic device 2.

In step 402, the user validates the configuration instruction or parameter by pressing a return/enter key. The processing unit 38 detects that the return/enter key is in the pressed position.

In step 404, the processing unit 38 transmits a control signal to the electronic device 2 via the communication unit 34 to indicate that the return/enter key is in pressed position and that the configuration instruction or parameter is to be processed by the electronic device 2.

In step 406, the processing unit 38 transmits a locking signal to a locking mechanism associated with the return/enter key to lock the return/enter key in pressed position.

In step 408, the processing unit 38 receives a feedback signal from the electronic device 2 via the communication unit 34 indicating that the control signal has been received by the electronic device 2 and the configuration instruction or parameter has been processed by the electronic device 2.

In step 410, the processing unit 38 transmits an unlocking signal to the locking mechanism associated with the return key to release the return key from the pressed position.

Figure 5 shows an example of a flow diagram of a method performed by the electronic device 2 according to an embodiment.

In step 500, the processing unit 20 receives the configuration instruction or parameter typed by the user on the keyboard 4 via the communication unit 14. The processing unit 18 stores the configuration instruction or parameter in the memory unit 18.

In step 502, the processing unit 20 receives the control signal from the keyboard 4 via the communication unit 14 indicating that the return key is in the pressed position and that the configuration instruction or parameter is now to be processed.

In step 504, the processing unit 20 processes the configuration instruction or parameter and transmits a feedback signal to the keyboard 4 via the communication unit 14.

Figure 6 shows an example of a flow diagram of a method performed by the keyboard 4 according to another embodiment.

In step 602, the user presses a function key associated with a predetermined configuration instruction or parameter stored in the electronic device 2. The processing unit 38 detects that a function key is in pressed position.

In step 604, the processing unit 38 transmits a control signal to the electronic device 2 via the communication unit 34 to indicate that the function key is in the pressed position and that a predetermined configuration instruction or parameter stored on the electronic device 2 is to be processed by the electronic device 2.

In step 606, the processing unit 38 transmits a locking signal to a locking mechanism associated with the function key to lock the function key in the pressed position.

In step 608, the processing unit 38 receives a feedback signal from the electronic device 2 via the communication unit 34 indicating that the control signal has been received by the electronic device 2 and the predetermined configuration instruction or parameter stored on the electronic device 2 has been processed by the electronic device 2.

In step 610, the processing unit 38 transmits an unlocking signal to the locking mechanism associated with the function key to release the function key from the pressed position.

Figure 7 shows an example of a flow diagram of a method performed by the electronic device 2 according to an embodiment.

In step 700, the processing unit 20 receives the control signal from the keyboard 4 via the communication unit 14 indicating that the function key is in pressed position and that a predetermined configuration instruction or parameter stored in the memory unit 18 is to be processed by the electronic device 2.

In step 702, the processing unit 20 processes the configuration instruction or parameter transmits a feedback signal to the keyboard 4 via the communication unit 14.

An advantage of the above embodiments is that configuration instructions and parameters can directly be input by a user via the keyboard 4 and confirmation that these configuration instructions and parameters have been processed can directly be output to the user via the keyboard 4. In this way, the electronic device 2 no longer needs to be equipped with a display to be configured. Then, the complexity and the cost of the electronic device 2 can be reduced.

It will be understood that the processing units referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to memory units for storing data. These memory units may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A keyboard for controlling an electronic device, the keyboard comprising:
at least one key which can be pressed into a pressed position; and
a locking mechanism for locking the key in the pressed position;
the keyboard being configured to:
transmit a control signal to a said electronic device when the key is pressed into a pressed position and to cause the locking mechanism to lock the key in the pressed position; and
cause the locking mechanism to release the key from the pressed position in response to receiving a feedback signal indicating that the control signal has been received by a said electronic device.

2. The keyboard of claim 1, wherein the locking mechanism comprises an electromechanical or electromagnetic switch operable to lock the key in the pressed position and to release the key from the pressed position.

3. The keyboard of claim 2, wherein the key comprises a permanent magnet and the electromagnetic switch comprises a coil operable to generate a magnetic force to lock the key in the pressed position.

4. The keyboard of any of claims 1 to 3, wherein the keyboard is configured to:
transmit an instruction or parameter typed by a user to a said electronic device electronic device using other keys of the keyboard; and
transmit the control signal to a said electronic device to indicate that the key is in the pressed position and that the instruction or parameter is to be processed by a said electronic device electronic device.

5. The keyboard of claim 4, wherein the keyboard is configured to:
cause the locking mechanism to release the key from the pressed position in response to receiving a feedback signal indicating the reception of the control signal by a said electronic device and that the instruction or the parameter has been processed by a said electronic device.

6. The keyboard of claim 4 or claim 5, wherein the key is a return/enter key.

7. The keyboard of any of claims 1 to 6, wherein the keyboard is configured such that
the transmitted control signal indicates that the key is in the pressed position and that a predetermined instruction or parameter stored on a said electronic device is to be processed by a said electronic device.

8. The keyboard of claim 7, wherein the keyboard is configured to:
cause the locking mechanism to release the key from the pressed position in response to receiving a feedback signal indicating the reception of the control signal by a said electronic device and the predetermined instruction or parameter stored on a said electronic device has been processed by a said electronic device.

9. The keyboard of claim 7 or claim 8, wherein the key is a function key.

10. A system comprising an electronic device and a keyboard according to any of claims 1 to 9.

11. The system of claim 10, wherein a said electronic device is an Internet of Things device.

12. A method of operating a keyboard for controlling an electronic device, the method comprising:
transmitting a control signal to a said electronic device to indicate that a key of the keyboard is in a pressed position;
locking the key in the pressed position; and
unlocking the key from the pressed position in response to receiving a feedback signal indicating that the control signal has been received by a said electronic device.

13. A computer program for device keyboard, comprising software code portions for performing the method of claim 12 when said computer program is run on the keyboard.
